# EUROPEAN PATENT APPLICATION

(11) **EP 2 172 498 A1**
(43) Date of publication of application: **07.04.2010**
(21) Application number: 08165857.7
(22) Date of filing: 03.10.2008
(51) Int. Cl.: C08F 255/02

(54) **Modification of polyolefins prepared with single-site catalysts**

(71) Applicant: Total Petrochemicals Research Feluy, 7181 Seneffe (Feluy) (BE)
(72) Inventor: Coupin, Thierry, 7141 Carnieres (BE)

(57) **Abstract**

The invention is a process for obtaining cross-linked poly-alpha-olefins comprising either:
- step (a) wherein at least one alpha-olefin is polymerised in the presence of at least one single-site catalyst and at least one cross-linking agent having at least one functional group, comprising a polymerisable double bond, and at least one electrophilic functional group, or
- step (b) wherein at least one polyolefin prepared with a single-site catalyst is mixed with at least one cross-linking agent;

wherein said cross-linking agent has at least one polymerisable double bond and at least one electrophilic functional group.

The invention also entails the polyolefin obtainable according to said process.

## Description

### FIELD OF THE INVENTION

The invention is related to the field of polyolefins prepared with single-site catalysts, preferably metallocenes. In particular, the invention covers a process for obtaining cross-linked polyolefins prepared with single-site catalysts, preferably metallocenes.

### BRIEF INTRODUCTION

As is well known, polyolefins, in particular polyethylene and polypropylene, are used to produce numerous types of intermediate and end products. Various well-known catalysts can be used for the polymerisation process, such as single-site catalysts, e.g. metallocenes, and Ziegler-Natta catalysts. The polyolefins obtained using single-site catalysts are generally considered to be highly linear polymers. They are suitable for a variety of applications requiring polymers having strong mechanical properties.

However, precisely because of their perceived linear molecular architecture, polyolefins prepared with single-site catalysts such as metallocenes, generally show insufficient melt strengths, particularly for certain applications such as film, moulding and foam applications. In blown film processes a good melt strength is required for high bubble stability. In cast film and also in extrusion moulding processes good melt strength is required to improve the ability to increase or maintain the polymer throughput rate and/or reduce or maintain extruder back pressure while improving draw down and/or reducing neck-in is particularly desired.

Particularly, in the case of polypropylene resins, melt strengths can have significant consequences. Processing operations where polypropylene's melt strength plays an important role include blow moulding, extrusion coating, thermoforming, fibre spinning and foam extrusion. In thermoforming, a poor melt strength results in a sagging phenomenon. In fibre spinning, a poor melt strength can result in undesired movements of the fibres due to transverse forces, for example by cooling air, which ultimately can lead to "married" fibres and fibre breakage. On the other hand, a melt strength that is too high will limit the achievement of low titre fibres. Accordingly, a correct balance between melt strength and drawability is desirable. For blown (biaxially oriented) or cast films, a correct balance between melt strength and stretchability is also very important. In foam extrusion, a poor melt strength results in cell rupture and non-uniform cell structure. For such an application, a poor drawability will limit the fineness of the walls.

In the past the rheological properties (and thereby melt strengths) of polyolefins prepared with single-site catalysts have been improved by varying the polymerisation conditions and/or by modifying the catalytic systems. Post-polymerisation modifications are also known in the art, for example via reactive extrusions or via irradiation. These processes can increase the amount of cross-linking within the polymer and consequently modify the polymer's rheological and mechanical properties. As used herein, the term "rheology modification" means change in melt viscosity of a polymer as determined by dynamic mechanical spectroscopy (DMS). Cross-linking is typically employed to increase the melt strength of the polymer while maintaining the high shear viscosity (that is, viscosity measured at a shear rate of 100 rad/sec by DMS). Thus a molten cross-linked polymer exhibits more resistance to stretching during elongation at low shear conditions (that is, viscosity measured at a shear of 0.1 rad/sec by DMS) and does not sacrifice the output at high shear conditions.

Several documents describe the process of irradiation with electron beams. This remains, however, a relatively costly process.

US7019044 discloses a process for producing polypropylene having increased melt strength, the process comprising (i) homopolymerising propylene or copolymerising propylene with one or more comonomers selected from ethylene and C4 to C10 alpha-olefins to produce a polypropylene homopolymer or copolymer respectively, having a double bond concentration of at least 0.1 per 10,000 carbon atoms, (ii) irradiating the polypropylene with an electron beam having an energy of at least 5 MeV and at a radiation dose of at least 5 kGray, and (iii) melting and mechanically processing the melt of polypropylene to form long chain branches on the polypropylene molecules.

US7169827 relates to the production of polypropylene having improved properties, including improved melt strength, the process comprising irradiating polypropylene which has been polymerised using a Ziegler-Natta catalyst with an electron beam having an energy of at least 5 MeV and a radiation dose of at least 10 kGray and mechanically processing the irradiated polypropylene to form long chain branches on the polypropylene molecules, whereby the polypropylene has a melt flow index (MFI) of at least 25 dg/min.

In EP1380613 a process is disclosed for producing polypropylene having increased melt strength by irradiating polypropylene in pellet form with an electron beam having an energy of from 0.5 to 25 MeV, delivered by an accelerator having a power of from 50 to 1000 kW and with a total radiation dose of from 10 to 120 kGray, characterised in that the irradiation is carried out in the presence of air.

Several documents also describe the process of reactive extrusion in the presence of initiators such as peroxides, silanes, azides and phenols.

US7056987 discloses a process for preparing cross-linked polyolefins, comprising the steps of adding a diazido compound of the formula (I) N=N=N--X--R--X--N=N=N wherein R represents an aryl, alkyl or arylalkyl group having 3 to 20 carbon atoms and X stands forCO--,--O--CO--SO₂--,--PO₂--,--PO₃--, or --Si(=O)--, and a peroxide compound of the general formula (II) R₁--X₁-OO--X₂--R₂ wherein R₁ and R₂ are the same or different and represent hydrogen, an aryl, alkyl or arylalkyl group having 3 to 20 carbon atoms and optionally comprising further peroxide groups, wherein one of R₁ and R₂ can form a ring, and X₁ and X₂ are the same or different and stand for a direct bond,--CO₂₋-or--CO--to a polyolefin in powder or pellet form; mixing the product to obtain a mixture; extruding the mixture in an extruder at a temperature above the decomposition temperature of the diazido compound of formula (I) and of the peroxide compound of formula (II).

EP1457518 discloses a grafted thermoplastic compositions according to the following process: mixing a coupling agent with a tackifier; followed by tumble blending of the mixture with a polymer or a polymer blend composition to be grafted; and extruding the resulting mixture at a temperature at which the coupling agent is activated. The coupling agent can be chosen amongst other compounds from peroxides, silanes, azides and phenols.

However, generally such reactive extrusions are hard to control. One drawback is the fact that peroxides, often used in such processes are oxygen air sensitive, and must be handled under a nitrogen atmosphere.
In the case of polyethylenes, reactive extrusions are too effective, causing far too much cross-linking. Polyethylene, especially heterogeneous linear low density polyethylene (LLDPE), when exposed to peroxide and/or radiation under certain conditions, forms gels as the molecular weight builds i.e. it results in modified LLDPE which has reduced processability compared to the unmodified LLDPE, especially in the high shear range.

In the case of polypropylenes, reactive extrusions are ineffective, since the rate of chain scission (degradation) tends to dominate the limited amount of chain coupling that takes place.

Hence, a method of improving the rheological properties of polyolefins prepared with single-site catalysts is required.

An object of the invention is thus to increase the melt-strength of polyolefins prepared with single-site catalysts without significantly decreasing the polyolefins' mechanical strengths.

It is further an object of the invention to carry out a method with which the extent of cross-linking within a polyolefin can be more easily controlled.

It is further an object of the invention to find a method for controlling the extent of cross-linking within a polypropylene more easily and thereby avoiding degradation.

It is further an object of the invention to render polyolefins prepared with single-site catalysts more suitable for use in blown film applications and/or cast film and/or injection moulding and/or foam applications.

It is another object of the invention to obtain polypropylenes prepared with single-site catalysts with improved melt-strengths to render their transformation into blow moulding and/or extrusion coating and/or thermoforming and/or fibre spinning and/or foam extrusion applications more efficient.

### SUMMARY OF THE INVENTION

It has been surprisingly found that polyolefins can be easily cross-linked with a cross-linking agent according to the invention, when the polyolefin is prepared with a single-site catalyst. The invention is thus a process for obtaining a cross-linked polyolefin comprising either
- step (a) wherein at least one alpha-olefin is polymerised in the presence of at least one single-site catalyst and at least one cross-linking agent,
   or
- step (b) wherein at least one polyolefin prepared with a single-site catalyst is mixed with at least one cross-linking agent;

The cross-linking agent in both cases has at least one polymerisable double bond and at least one electrophilic functional group.

Examples of suitable cross-linking agents include functionalised acrylates and methacrylates, preferably glycidyl acrylate and glycidyl methacrylate.

The invention also covers polyolefins obtainable from this process, as well as the use of said cross-linking agents to cross-link polyolefins, in particular polypropylenes.

It has been found that the polyolefins obtained according to the invented process have an increased amount of cross-linking. In addition, they show little or no high shear viscosity increase and higher melt strength in comparison with a corresponding polymer absent the cross-linking agent. Thus said cross-linked polyolefins are particularly useful in applications such as blown film applications and/or cast film and/or injection moulding and/or foam applications.

It has also been found that the level of cross-linking can be more precisely and more easily controlled using the method of the invention.

The invention is particularly useful for obtaining cross-linked polypropylenes.

### BRIEF DESCRIPTION OF THE DRAWINGS

Figure 1 shows the effect of glycidyl methacrylate mixed with a Ziegler-Natta catalysed polypropylene.
Figure 2 shows the effect of glycidyl methacrylate mixed with a metallocene-catalysed polypropylene.

### DETAILED DESCRIPTION OF THE INVENTION

The applicant has developed a means by which polyolefins prepared with single-site catalysts can be used in applications normally reserved for polyolefins with inherently higher melt-strength, but weaker mechanical properties. According to this invention, polyolefins can be obtained having both improved melt-strengths and consequently better mechanical properties.

Having a higher melt strength, the polyolefin of the invention can be used more easily in applications and transformations previously limited to conventional linear or branched polyolefins. In addition, the polyolefin prepared using one or more single-site catalysts and being cross-linked, allows it to be used in transformation processes, in which polyolefins prepared using single-site catalysts have traditionally not been used or have only had marginal use.

The polyolefin is generally prepared by the polymerisation of alpha-olefins, preferably propylene and ethylene to produce polypropylene and polyethylene, respectively. The polyolefins prepared according to the present invention can be homopolymers or they can be copolymers of alpha-olefin e.g. ethylene or propylene, and at least one comonomer. When copolymerising ethylene, said comonomer is a C₃ to C₁₀ alpha-olefin, such as 1-butene, 1-pentene, 1-hexene, 1-octene, 1-methylpentene. Preferably, 1-hexene is used as the comonomer for ethylene copolymerisation. When copolymerising propylene, said comonomer is ethylene or a C₄ to C₁₀ alpha-olefin, such as 1-butene, 1-pentene, 1-hexene, 1-octene, 1-methylpentene. Preferably, ethylene is used as the comonomer for propylene copolymerisation. As is known by the person skilled in the art, the average molecular weight can be controlled using hydrogen or other known means of controlling the average molecular weight.

A single-site catalyst is for example a metallocene catalyst or any other constrained geometry catalyst.

The metallocene-catalysed polyethylenes are produced using a metallocene-based catalyst system, which comprises a metallocene, an activating agent and optionally a support.

Any metallocene catalyst known in the art can be used. The metallocenes of the type contemplated as useful for the present invention include those represented by the formula Rₓ(Z)ₘ(Z)ₙMQₖ wherein M is a metal selected from the group consisting of IVB, VB, and VIB metals of the periodic table and is preferably selected from Ti, Zr, and Hf; each Z is bound to the metal M and is the same or different and is a cyclopentadienyl-type ligand selected from substituted or unsubstituted cyclopentadienyl, indenyl, tetrahydroindenyl, fluorenyl, and octahydrofluorenyl ligands; the optional substituents on the ligand(s), which can be the same or different, can be chosen from an alkyl, alkenyl, aryl, alkylaryl or arylalkyl radical having from 1 to 20 or carbon atoms or a halogen; R is an optional structural bridge linking the Z ligands to each other or linking a Z ligand with the metal M, wherein each R can be selected from a C₁-C₄ alkylene radical, a dialkyl germanium or silicon or siloxane, or an alkyl phosphine or amine radical, preferably Me₂C, ethylene, Ph₂C or Me₂Si; x is 1 or 0; and each Q is the same or different and is selected from the group consisting of hydrogen, halogens, aryls, alkyls, alkenyls, alkylaryls, arylalkyls, alkylidenes or alkoxide radical having from 1 to 20 carbon atoms; m, n and k can be selected from 0, 1 and 2, such that m+n+k is equal to the oxidation number of the metal M, unless a Z ligand is linked to the metal M via the optional structural bridge R, in which case m+n+k+x must equal the oxidation number of the metal M.
Preferably, when m or n equals 2, the cyclopentadienyl-type ligands, if substituted are symmetrically substituted in positions 2 and/or 4, and more preferably they are unsubstituted.

Examples of metallocenes that can be used among others are ethylene bis(tetrahydroindenyl) zirconium dichloride, ethylene bis(indenyl) zirconium dichloride or ethylene bis(n-butylcyclopentadienyl) zirconium dichloride, dimethylsilyl bis(2-methyl-4-phenylindenyl) zirconium dichloride, dimethylsilyl-bis(2-methylindenyl) zirconium dichloride, dimethylsilyl bis(2-methyl-4,5-benzoindenyl) zirconium dichloride, isopropylidene (cyclopentadienyl)(fluorenyl) zirconium dichloride, isopropylidene (2-methyl-4-tert-butylcyclopentadienyl)(fluorenyl) zirconium dichloride, isopropylidene (2-methyl-4-tert-butylcyclopentadienyl)(3,6-ditertbutyl-fluorenyl) zirconium dichloride. The most preferred metallocene is ethylene bis(tetrahydroindenyl) zirconium dichloride. Mixtures of different metallocene catalysts can be used if multi-modal polymers are desired. These can be present together in one reactor or separately in a number of reactors, which are connected in series or in parallel.

The activating agent, which activates the metallocene catalyst component, can be any agent known for this purpose such as an aluminium-containing agent, a boron-containing agent or a fluorinated agent. The aluminium-containing activating agent may comprise an alumoxane, an alkyl aluminium, a Lewis acid and/or a fluorinated catalytic support. Preferably the aluminium-containing activating agent is an alumoxane or an alkyl aluminium. More preferably the aluminium compound is an alumoxane. Most preferably the aluminium compound is methylalumoxane.

The alumoxanes that may be used in the process of the present invention are well known by the person skilled in the art and preferably comprise oligomeric linear and/or cyclic alkyl alumoxanes represented by the formula R-(Al(R)-O)ₙ-AlR₂ for oligomeric, linear alumoxanes, and (-Al(R)-O-)ₘ for oligomeric, cyclic alumoxanes, wherein n is from 1 to 40, preferably from 10 to 20, m is from 3 to 40, preferably from 3 to 20, and R is a C₁-C₈ alkyl group and preferably methyl. Generally, in the preparation of alumoxanes, for example, methylalumoxane (MAO), a mixture of linear and cyclic compounds is obtained.

When alumoxane is not used as the activating agent, one or more aluminiumalkyl represented by the formula AlR_{X} can be used wherein each R is the same or different and is selected from halogens or from alkoxy or alkyl groups having from 1 to 12 carbon atoms and x is from 1 to 3. Especially suitable are trialkylaluminiums, the most preferred being triisobutylaluminium (TIBAL) and triethylaluminum (TEAL).

Suitable boron-containing activating agents may comprise a triphenylcarbenium boronate such as tetrakis-pentafluorophenyl-borato-triphenylcarbenium as described in EP 0427696, or those of the general formula [L'-H]⁺ [B Ar₁ Ar₂ X₃ X₄]⁻ as described in EP 0277004 (page 6, line 30 to page 7, line 7).

The metallocene may be supported according to any method known in the art. In the event it is supported, the support used in the present invention can be any organic or inorganic solid, particularly porous supports such as talc, inorganic oxides, and resinous support material such as polyolefin. Preferably, the support material is an inorganic oxide in its finely divided form.

The polymerisation process can be carried out in a low-pressure polymerisation reactor according to any of the methods known to the person skilled in the art. The polymerization of the olefin can be carried out in gas, solution or slurry phase. Polymerization in slurry phase is used to prepare the medium and high density polyolefin. Gas phase polymerization is preferred to prepare low density polyolefin. Solution polymerization is preferred for the production of very low density polyolefin. The polymerization temperature ranges from 20°C to 125°C, preferably from 60°C to 95°C and the pressure ranges from 0.1 MPa to 5.6 MPa, preferably from 2 MPa to 4 MPa, for a time ranging from 10 minutes to 4 hours, preferably from 1 and 2.5 hours.

A continuous single loop reactor is preferably used for conducting the polymerization under quasi steady state conditions. A double loop reactor may also be used when a bi-modal resin is desired. The reactants for the polymerisation process can be added to the polymerisation reactor together simultaneously or separately in any order, as is known to the person skilled in the art.

The polyolefin resin used in the present invention can be prepared with either a single site catalyst, in a one- or two-loop reactor or with a catalyst system comprising several single site components and it has therefore either a monomodal or a bimodal molecular weight distribution (MWD). A narrow molecular weight distribution is preferred. The molecular weight distribution can be completely defined by means of a curve obtained by gel permeation chromatography. Generally the molecular weight distribution is more simply defined by a parameter known as the dispersion index D, which is the ratio between the average molecular weight by weight (M_{w}) and the average molecular weight by number (Mₙ). The dispersion index constitutes a measure of the width of the molecular weight distribution. It is of from 2 to 7, preferably of from 2 to 5.

During polymerisation hydrogen is used to control the average molecular weight and in consequence the melt index of the polyolefin.

The polypropylenes obtained from the present invention have a melt index, measured according to norm ISO 1133, condition L, at a temperature of 230 °C, using a weight of 2.16 kg. The person skilled in the art is aware that the suitable melt flow range of the polypropylene depends upon the respective method of forming an article. Thus, for injection stretch blow moulding (ISBM) the preferred melt flow index range is from 1.5 dg/min to 30 dg/min. For cast film extrusion the preferred melt flow index range is from 3.0 dg/min to 15 dg/min. For blown film extrusion the preferred melt flow index range is from 0.3 dg/min to 3.0 dg/min. For blow moulding the preferred melt flow index range is from 0.3 dg/min to 3.0 dg/min. For sheet extrusion the preferred range is from 2.0 dg/min to 10 dg/min. For injection moulding the preferred range is from 10 dg/min to 100 dg/min.

The polyethylenes obtained from the present invention have a melt index, measured according to norm ISO 1133, condition D, at a temperature of 190°C, using a load of 2.16 kg. The person skilled in the art is aware that the suitable melt flow range of the polyethylene depends upon the respective method of forming an article. Thus, for injection stretch blow moulding (ISBM) the preferred melt flow index range is from 1.5 dg/min to 30 dg/min. For cast film extrusion the preferred melt flow index range is from 3.0 dg/min to 15 dg/min. For blown film extrusion the preferred melt flow index range is from 0.3 dg/min to 3.0 dg/min. For blow moulding the preferred melt flow index range is from 0.3 dg/min to 3.0 dg/min. For sheet extrusion the preferred range is from 2.0 dg/min to 10 dg/min. For injection moulding the preferred range is from 10 dg/min to 100 dg/min.

The polyethylene obtained from the present invention has a density of at least 0.920 g/cm³, preferably of at least 0.925 g/cm³, and most preferably of at least 0.927 g/cm³. They have a density of at most 0.965 g/cm³, preferably of at most 0.960 g/cm³, more preferably of at most 0.955 g/cm³, even more preferably of at most 0.950 g/cm³, and most preferably of at most 0.945 g/cm³. The density is measured at 23°C following the method described in ASTM D 1505. The density of the polyethylene is regulated by the amount of comonomer(s) in the polyolefin. A lower density requires a higher amount of comonomers than a higher density.

It is also an object of the invention to obtain polyolefins prepared with single-site catalysts with higher melt strengths in a process during polymerisation, rather than during post-polymerisation transformations.

This is provided by carrying out step (a), by polymerising the alpha-olefin additionally in the presence of one or more cross-linking agents, as well as in the presence of the single-site catalyst, it is possible to obtain polyolefins with a high level of cross-linking *in-situ.* The amount of cross-linking can be easily controlled by varying the concentration of the cross-linking agent in the polymerisation reactor. By increasing the extent of cross-linking in the polyolefin to a certain level, its rheological properties are improved including its melt strength.

Alternatively, the polyolefin is cross-linked during a post-polymerisation reaction as provided by step (b). The cross-linking agent is added to the metallocene-catalysed polyolefin and mixed together. Mixing can be carried out with any known mixing means known to the person skilled in the art. Mixing can occur for example by magnetic stirring, shear mixing, refluxing, or ultrasonication. Suitable apparatus for shear mixing include a batch process, such as in a Banbury or Brabender Mixer, or in a continuous process, such as in an extruder e.g. a twin screw extruder. Preferably, the mixing means is an extruder, particularly a twin screw extruder, which allows direct injection for further transformation of the extruded polymer. It is also possible to form and recover pellets of the extruded polymer.

In a Brabender Mixer, mixing occurs from at least 20rpm, preferably at least 30rpm, more preferably at least 40rpm. The maximum mixing speed is at most 100rpm, preferably at most 80rpm, more preferably at most 70rpm. The mixing speed is most preferably around 50rpm.

Preferably, the temperature of mixing ranges from 160°C to 230°C, depending on the polyolefin with which the cross-linking agent is mixed. In the case of polypropylene, the mixing temperature is preferably maintained a temperature in the range from 180°C to 230°C, more preferably in the range from 180°C to 210°C. In the case of polyethylene, the mixing temperature is preferably maintained at a temperature in the range from 160°C to 215°C, more preferably in the range from 160°C to 210°C.

The time required for the blending can vary broadly and depends on the method of blending employed and the temperature, as is known by the person skilled in the art. The time required is the time sufficient to thoroughly mix the components. Generally, the individual polymers are blended for a time of about 10 seconds to about 30 minutes, preferably to about 20 minutes, more preferably to about 10 minutes.

The amount of cross-linking agent added to the polyolefin depends on the desired level of cross-linking within the polyolefin. The more cross-linking agent that is added, the more cross-linking will occur between the polyolefin chains. In this way, cross-linking can be easily controlled. Preferably, the amount of cross-linking agent added to the polyolefin is at least 0.05wt% based on the total weight of the polyolefin. More preferably, the amount of cross-linking agent is at least 0.1wt%. Preferably, the maximum amount of cross-linking agent is at most 1wt%, more preferably at most 0.7wt% and most preferably at most 0.5wt%, based on the total weight of the polyolefin.

The cross-linking agent comprises a polymerisable double bond and an electrophilic functional group. The polymerisable double bond can be selected, for example, from acrylate and methacrylate. Preferably, the electrophilic functional group must be capable of cross-linking with another polyolefin chain. The electrophilic functional group can be selected from, but is not limited to, alkyl halide, carboxylic acid, anhydride, sulphonic acid, epoxide, groups. Preferably, the electrophilic functional group is an epoxide. More preferably, the epoxide is present in the form of a glycidyl group.

Examples of suitable cross-linking agents are thus glycidyl methacrylate, glycidyl acrylate, and the like. More preferably the cross-linking agent is glycidyl acrylate or glycidyl methacrylate. Most preferably, the cross-linking agent is glycidyl methacrylate.

The cross-linking agent, preferably glycidyl methacrylate or glycidyl acrylate, are either introduced into the reactor (*in-situ* cross-linking) or into the mixing means together with the polymerised polyolefin (post-polymerisation cross-linking) via a master batch intermediary. The master batch intermediary is preferred, since this allows a facilitated addition of the cross-linking agent to the polyolefin, and better dispersion of the agent therein. Better dispersion also results in more controlled cross-linking of the polyolefin.

The master batch comprises at least 8wt%, preferably at least 10wt%, more preferably at least 12wt% of the cross-linking agent based on the total weight of the master batch and at most 25wt%, preferably at most 22wt% and more preferably at most 20wt% of the cross-linking agent based on the total weight of the master batch.

The preferred master batch is one, which comprises around 12 to 16wt% of cross-linking agent, the most preferred master batch having 14wt% of cross-linking agent based on the total weight of the master batch.

The master batch further comprises a polyolefin in an amount of at least 75%, preferably at least 78wt%, more preferably at least 80wt% based on the total weight of the master batch. At most the master batch comprises at most 92wt% of polyolefin, preferably at most 90wt% and more preferably at most 88wt% of polyolefin.

The polyolefin of the master batch can be the same or different to the polyolefin to which the master batch is added for cross-linking. Preferably, the polyolefin in the master batch is the same as the polyolefin to be cross-linked.

Without wishing to be bound by theory, it is thought that the cross-linking of the polyolefin is made possible in the presence of an appropriate cross-linking agent due to the particular structure of polyolefins prepared with single-site catalysts. It is thought that the cross-linking can be successfully carried out due to a higher amount of double bonds within these polyolefins in comparison to polyolefins prepared using non-single-site catalysts, such as chromium or Ziegler-Natta catalysts.

The following examples are only provided to illustrate the invention and are not meant to limit the scope of the invention as provided by the claims.

### EXAMPLES

### Example 1

A Ziegler-Natta-polymerised polypropylene (znPP) having
- a melt flow index of 25g/10min as measured according to ISO 1133, condition L, at a temperature of 230°C under a load of 2.16 kg,
- a flexural modulus of 1900MPa, measured according to ISO 178, and
- a notched Izod impact strength of 4kJ/m², measured according to ISO 180 was mixed with 2.5wt% of a Cesa-Extend ® masterbatch from Clariant containing
- 14wt% of glycidyl methacrylate compatibilising compound, in a Brabender Mixer at 190°C at 50rpm for about 30 minutes to obtain Sample A.

An equivalent amount of znPP was extruded under the same conditions, but without any cross-linking agent to obtain Comparative Sample A'.

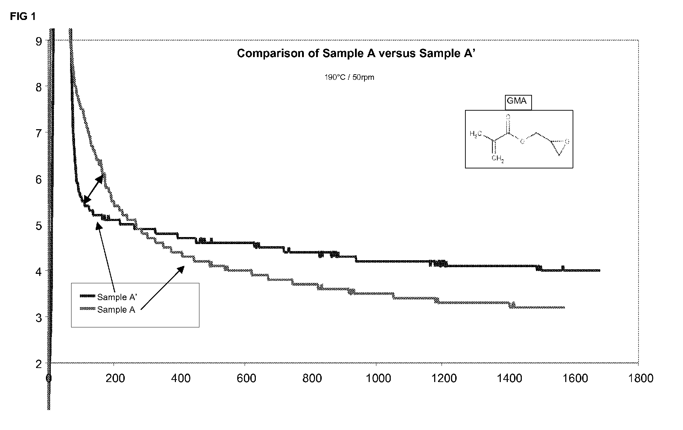

Figure 1 shows the comparison of the Torque rheological properties (Torque in Nm) as a function of time (in minutes) of the znPP as it is extruded with the glycidyl methacrylate (Sample A) with the znPP having no cross-linking agent (Comparative Sample A').

### Example 2

The Comparative Example 1 above was repeated using the same conditions, except the znPP was replaced with a metallocene-polymerised polypropylene (mPP), having:
- a melt flow index of 15g/10min as measured according to ISO 1133, condition L, at a temperature of 230°C under a load of 2.16 kg,
- a flexural modulus of 1300MPa, measured according to ISO 178, and
- a notched Izod impact strength of 3kJ/m², measured according to ISO 180 to obtain Sample B.

An equivalent amount of mPP was extruded under the same conditions, but without any cross-linking agent to obtain Comparative Sample B'.

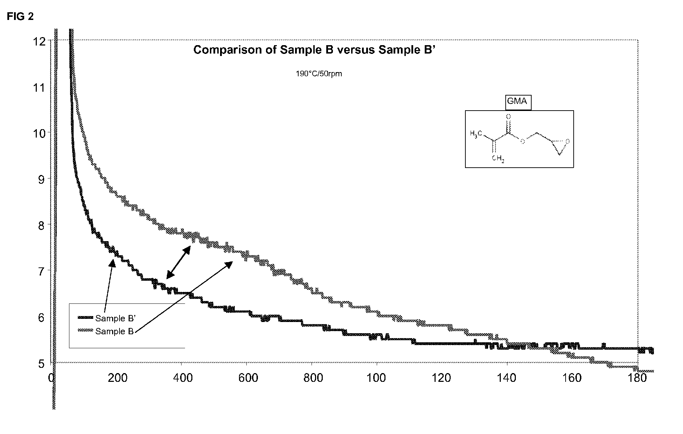

Figure 2 shows the comparison of the Torque rheological properties (Torque in Nm) as a function of time (in minutes) of the mPP as it is extruded with the glycidyl methacrylate (Sample B) with the mPP having no cross-linking agent (Sample B').

Comparison of the examples shows that the difference in the Torque rheological properties during extrusion is much greater between the mPP resins than between the znPP resins during the first 10 minutes of extrusion. This indicates that a more significant degree of cross-linking occurs in the mPP resin than in the znPP. This was also proven by the obtained melts strengths of each resin, wherein the melt strength of the cross-linked polyolefin obtained with the glycidyl methacrylate was higher than the same polyolefin not comprising any cross-linking agent.

Polypropylenes and polyethylenes prepared with a single-site catalyst, in particular metallocenes, are much more susceptible to cross-linking using the cross-linking agent according to the invention. This results in much better control of the level of cross-linking within the resin.

## Claims

1. A process for obtaining cross-linked polyolefins comprising either:
- step (a) wherein at least one alpha-olefin is polymerised in the presence of at least one single-site catalyst and at least one cross-linking agent;
or
- step (b) wherein at least one polyolefin prepared with a single-site catalyst is mixed with at least one cross-linking agent;
wherein said cross-linking agent has at least one polymerisable double bond and at least one electrophilic functional group.

2. The process according to claim 1 wherein the single-site catalyst is a metallocene catalyst.

3. The process according to claim 1 or 2 wherein the polymerisable double bond of the cross-linking agent is present in the from of an acrylate or methacrylate.

4. The process according to any one of the preceding claims wherein the electrophilic functional group of the cross-linking agent is selected from alkyl halide, carboxylic acid, anhydride, sulphonic acid and epoxide groups.

5. The process according to claim 4 wherein the epoxide functional group is present in the form of a glycidyl group.

6. The process according to any one of the preceding claims wherein the cross-linking agent is selected from glycidyl acrylate and glycidyl methacrylate.

7. The process according to any one of the preceding claims wherein the alpha-olefin is selected from ethylene and propylene.

8. A cross-linked polyolefin prepared with a single-site catalyst and cross-linked with a cross-linking agent having at least one polymerisable double bond and at least one electrophilic functional group, such that the melt strength of the polyolefin is higher than the same polyolefin comprising essentially none of said cross-linking agent.

9. A cross-linked polyolefin prepared with a single-site catalyst, obtainable according to any one of claims 1 to 7.

10. The polyolefin according to claims 8 or 9, wherein the polyolefin is polyethylene.

11. The polyolefin according to claims 8 or 9, wherein the polyolefin is polypropylene.

12. Use of a cross-linking agent selected from glycidyl methacrylate and glycidyl acrylate for cross-linking a polyolefin prepared with at least one single-site catalyst, preferably prepared with at least one metallocene catalyst.
